# FASCICULE DE BREVET EUROPEEN

(11) **EP 3 488 022 B1**
(45) Date de publication et mention de la délivrance du brevet: **22.04.2020**
(21) Numéro de dépôt: 17749622.1
(22) Date de dépôt: 20.07.2017
(51) Int. Cl.: C22B 21/00

(54) **FABRICATION D'ADDITIFS MÉTALLURGIQUES TITRÉS POUR LA SIDÉRURGIE, LES FONDERIES ET LE SECTEUR DES NON-FERREUX**
HERSTELLUNG VON TITRIERTEN METALLURGISCHEN ADDITIVEN FÜR DIE STAHLINDUSTRIE, GIESSEREIEN UND DEN EISENFREIEN SEKTOR
PRODUCTION OF TITRATED METALLURGICAL ADDITIVES FOR THE STEEL INDUSTRY, FOUNDRIES AND THE NON-FERROUS SECTOR

(30) Priorité: 22.07.2016 EP 16180727; 01.09.2016 BE 201605672
(43) Date de publication de la demande: 29.05.2019
(73) Titulaire: Centre de Recherches Métallurgiques ASBL - Centrum voor Research in de Metallurgie VZW, 1000 Bruxelles (BE)
(72) Inventeur: MARIQUE, Christian, 4042 Liers (BE); NELIS, Adrien, B-5030 Gembloux (BE); DORMANN, Marcel, 4600 Vise (BE); HERMAN, Jean-Claude, 4670 Blegny-Trembleur (BE)
(74) Mandataire: Pronovem
(86) Numéro de dépôt international: PCT/EP2017/068363
(87) Numéro de publication internationale: WO 2018/015492

(56) Documents cités:
- WO-A1-2011/032696
- DE-A1- 2 757 402
- FR-A1- 2 314 256
- US-A- 5 769 331

## Description

### Objet de l'invention

La présente invention se rapporte à la fabrication, au départ de produits en aluminium recyclés, de nouveaux produits riches en aluminium valorisés comme additifs titrés et adaptés aux opérations de désoxydation et mise à nuance dans le cadre des procédés métallurgiques et sidérurgiques.

Alternativement, l'invention se rapporte au recyclage de produits riches en aluminium pour les transformer en additifs titrés pour bains de revêtement à chaud (aluminisation, galvanisation) de l'acier et autres produits métalliques.

La présente invention s'adresse en particulier au recyclage d'emballages et de résidus divers en aluminium ou contenant de l'aluminium (copeaux d'usinage, résidus de démantèlement, ...).

### Etat de la technique

Il est connu que l'aluminium est un métal très intéressant du point de vue du recyclage. Il peut être indéfiniment recyclé sans perte de qualité et refondu en consommant seulement 5% de l'énergie requise pour la production d'aluminium primaire. Notamment le recyclage d'aluminium usagé de post-consommation (tels que des canettes à boisson) permet d'économiser l'énergie et de minimiser les émissions de CO₂.

Les déchets nouveaux sont générés pendant les étapes de production ou fabrication, le produit final obtenu étant vendu au consommateur. Les déchets anciens sont générés lorsqu'un produit contenant de l'aluminium atteint sa fin de vie de consommation et est collecté et traité par recyclage.

Il existe deux grands types différents d'emballage :
- les canettes à boisson et nourriture, bombes d'aérosol, barquettes alimentaires et plateaux-menu, blisters de médicaments où une feuille d'aluminium est soudée à une coque plastique, ... appelés aussi emballages rigides et semi-rigides ;
- les emballages flexibles dans lesquels une feuille d'aluminium d'épaisseur typiquement comprise entre 5 et 200µm est :
   - soit utilisée seule sous forme de film (« foil » ou « papier aluminium ») ou de sachets ou emballages scellés,
   - soit co-laminée par exemple avec du plastique ou du carton/papier.

Les emballages rigides/semi-rigides peuvent généralement être qualifiés de « robustes » tandis que les emballages flexibles peuvent généralement être qualifiés de « légers » ou « très légers ».

Les canettes à boisson en aluminium constituent la plus grande partie des emballages rigides et semi-rigides. Ces déchets ont une teneur en aluminium élevée (généralement > 90%) et donc une grande valeur marchande.

En Europe, en moyenne, 70% des canettes sont récoltées. De manière générale pour l'emballage rigide, le taux de recyclage est de 50% (données : Norsk Hydro).

Les déchets d'emballage flexible ont une teneur globale en aluminium plus faible et très variable lorsqu'ils se présentent en feuilles minces peintes et vernies et/ou co-laminées avec du papier et/ou du plastique. Ainsi, dans le cas des foils ou emballages scellés, la teneur en aluminium peut varier dans une plage allant de 7-8 à 90%, par exemple.

Selon la norme EN 13920, les canettes à boisson usagées contiennent en moyenne 94% d'aluminium métallique, 0,8% d'oxyde et 5,2% de matériau étranger. Les emballages revêtus, moins riches en aluminium, contiennent en moyenne 71% d'aluminium métallique, 3,8% d'oxyde et 24,7% de corps étrangers tels que peintures, vernis, etc.

Les alliages d'aluminium pour corroyage sont des alliages à base d'aluminium destinés à la transformation par des techniques de forge (laminage, filage, matriçage, etc.). Ils sont désignés, en vertu des normes américaine et européenne (EN 573-1) par un système numérique à 4 chiffres identifiant la composition chimique de l'alliage. Ainsi, par exemple, la série 1000 désigne les produits contenant 99% d'aluminium au minimum, la série 2000 a le cuivre comme élément d'alliage principal (Al₂Cu, Al₂cuMg), la série 3000 le manganèse (Al₆Mn), la série 5000 le magnésium (Mg₂Si), la série 7000 le zinc (MgZn₂), etc.

Le document FR 2 801 060 A1 divulgue un procédé de fabrication d'un produit intermédiaire, tel qu'une plaque de laminage, une billette de filage, un bloc de forge ou un lingot, en un alliage déterminé de la série 7000, ledit alliage déterminé ayant une teneur visée en au moins un premier élément anti-recristallisant, choisi dans le groupe constitué de Zr et Cr, ledit procédé étant caractérisé en ce qu'il comprend:
- l'approvisionnement en chutes et copeaux d'usinage comprenant des chutes et copeaux en au moins un deuxième alliage de la série 7000 ayant une teneur visée en au moins un deuxième élément anti-recristallisant, choisi dans le groupe constitué de Zr et Cr, supérieure à la teneur maximale acceptée dans ledit alliage déterminé;
- au moins une étape de raffinage desdits chutes et copeaux permettant de réduire la teneur en ledit deuxième élément anti-recristallisant jusqu'à une valeur inférieure à la teneur maximale acceptée dans ledit alliage déterminé ;
- l'élaboration d'un lot de métal liquide au titre, en tout ou partie, à partir du métal épuré issu du raffinage ;
- la formation dudit produit par coulée dudit métal liquide au titre.

Ce procédé permet de recycler des chutes et copeaux d'usinage en alliages de la série 7000 dans la fabrication de produits intermédiaires à forte valeur ajoutée.

Le document FR 3 023 848 A1 divulgue un procédé de fabrication d'un lingot en alliage d'aluminium en utilisant des déchets en alliage d'aluminium de la série 2xxx ou 7xxx dans lequel :
- on approvisionne les déchets en alliage d'aluminium de la série 2xxx ou 7xxx ;
- optionnellement on effectue une séparation de l'huile présente dans les déchets ;
- on réalise une première opération de traitement des déchets avec un premier liquide à une température d'au moins 10°C, ledit premier liquide étant une solution aqueuse ayant un pH de 1 à 5 ou de 8 à 13 ;
- on sépare le premier liquide et les déchets ainsi traités ;
- on effectue au moins une seconde opération de traitement des déchets en utilisant un second liquide ;
- on sépare le second liquide et les déchets ainsi traités ;
- on réalise la fusion des déchets ainsi obtenus ;
- on coule un lingot en alliage d'aluminium de la série des déchets utilisés.

Les lingots obtenus par le procédé peuvent être utilisés pour la fabrication après laminage, filage et/ou forgeage d'éléments de structure aéronautique.

Le problème du recyclage de scraps contenant des alcalins ou alcalino-terreux se rencontre surtout dans la filière aéronautique.

Le document CN 1401443 A divulgue un procédé de récupération d'emballage en papier aluminium-plastique avec un agent de délaminage comprenant l'immersion dudit papier d'emballage dans une solution acide contenant de l'acide nitrique à une concentration comprise entre 15 et 68% et à une température comprise entre 40 et 70°C, pour dissoudre la couche d'oxyde d'aluminium à la position de jonction, et pour séparer la couche d'aluminium de la couche de matière plastique ou de papier.

Le document CN 102671913 A décrit un procédé global d'utilisation pour des déchets de matériau d'emballage composite en papier aluminium-plastique. Le procédé comprend les étapes suivantes: le broyage, le nettoyage et le séchage dudit matériau; le chauffage, la pyrolyse et la gazéification du matériau séché en autoclave à haute pression et haute température sous vide, et la réalisation à basse température d'une récupération par durcissement; la mise du matériau en papier mélangé avec l'aluminium-plastique pyrolysé et gazéifié dans une cuve de réaction, en ajoutant une solution de potasse caustique, pour la réaction, et la récupération de l'hydrogène généré pour servir de carburant spécial; la neutralisation de la matière restante à l'aide d'acide sulfurique dilué, et l'exécution d'un pressage au filtre et le lavage pour obtenir un gâteau de filtre, à savoir une pulpe aqueuse; et la filtration complète de la pulpe aqueuse, l'évaporation et la cristallisation du filtrat obtenu et la centrifugation pour éliminer les résidus de manière à récupérer l'alun de potassium, dans une application au sens large.

Le document US 6,193,780 B1 divulgue un procédé pour la récupération d'aluminium et d'énergie à partir d'emballage en aluminium-plastique ainsi qu'un four pour mettre en œuvre un tel procédé, qui comprend un prétraitement pour la récupération du papier, la séparation de l'aluminium et de produits recyclables par pyrolyse du polyéthylène, essentiellement pour leur teneur en énergie. Le produit à traiter est introduit dans une enceinte dont les parois sont chauffées à une température de préférence comprise entre 300°C et 500°C, les parois étant inclinées de manière à recueillir dans un récipient une fraction lourde provenant de la pyrolyse de polyéthylène, tandis que la fraction légère, qui se volatilise, est brûlée. Le procédé est mis en œuvre dans un four qui contient une série de plateaux, et dans lequel circule un gaz de chauffage. La surface supérieure du four a la forme d'un cône inversé, avec un orifice au niveau de la pointe à travers laquelle passe son axe. La fraction lourde de la pyrolyse s'écoule au travers de celui-ci et est collectée séparément de l'aluminium.

Le document US 2003/0129077 A1 divulgue un alliage à base d'aluminium pour la production d'alliages de fonderie avec le magnésium comme principal élément d'alliage, qui contient au moins 50% de ferraille sur base d'aluminium primaire et comme aluminium primaire restant et/ou de ferraille sur base d'aluminium secondaire de composition connue. Pour la production de l'alliage à base d'aluminium, principalement des emballages d'aliments et de produits alimentaires pour animaux sont utilisés, séparés par un procédé de pyrolyse et ensuite l'aluminium contenu dans l'emballage est recyclé par fusion. Les alliages de fonderie obtenus à partir de l'alliage à base d'aluminium conviennent en particulier pour la fabrication de pièces résistant à la chaleur et/ou à la corrosion dans les moteurs, en particulier pour la production de blocs moteurs, de culasses et de carters d'huile, au moyen de coulée au sable, coulée trempée, coulée sous pression, thixomoulage ou thixoforgeage.

Le document US 2008/0264596 A1 divulgue un procédé pour le recyclage de matériaux composites comprenant les étapes consistant à amener une quantité de matériau composite composé d'au moins un polymère et d'aluminium dans au moins un premier réacteur; le chauffage du matériau composite dans un environnement non oxydant à une température suffisante pour vaporiser le polymère et former un sous-produit hydrocarboné et de l'aluminium dans le premier réacteur; l'alimentation en aluminium séparé du polymère dans un second réacteur; et le chauffage de l'aluminium dans un environnement non oxydant à une température suffisante pour faire fondre l'aluminium dans le second réacteur.

Le document WO 2011/032696 A1 concerne un procédé de recyclage de l'aluminium à partir de canettes de boissons, dans lequel les canettes de boisson sont broyées en petites particules dans un broyeur et les particules sont d'abord nettoyées de résidus adhérents de boisson et ensuite nettoyées de résidus adhérents de peinture. La première étape de nettoyage est une étape d'essorage dans une centrifugeuse. La deuxième étape de nettoyage en aval est une étape thermique de brûlage dans un four. Enfin, les particules nettoyées thermiquement sont fondues dans une cuve de fusion.

Le document EP 0 442 027 A2 divulgue un procédé de récupération d'emballages jetables, en particulier des récipients d'emballage en forme de plateau pour la restauration à longue distance, dans lequel il est proposé d'orienter les conteneurs, avec le côté ouvert dirigé vers le bas, successivement au-dessus d'une douche de nettoyage dirigée de bas en haut et ensuite sous une douche de nettoyage dirigée de haut en bas, et à les soumettre ensuite à une compression de matière au moyen de forces dirigées verticalement et enfin à une opération de pressage, qui se déroule perpendiculairement à celles-ci, pour comprimer davantage le matériau. Dans le document EP 0 487 961 A2, on décrit un procédé et un dispositif pour la mise en œuvre du procédé, où deux opérations de pressage sont successivement envisagées pour un compactage important du matériau d'emballage non réutilisable, le matériau comprimé étant ensuite granulé.

Le document DE 25 18 935 A1 divulgue un procédé pour le recyclage de déchets ou de copeaux d'aluminium en un produit fini, en comprimant les déchets d'aluminium à température ambiante en billettes ou blocs ayant une densité de 1,8-2,4 g/cm³, en chauffant le bloc métallique à 350-550°C, en comprimant le bloc de métal chauffé dans un récipient sous pression en une masse ayant une densité > 2,4 g/cm³, tout en maintenant un état dans lequel la pression de l'air appliquée au niveau du périmètre du bloc en métal est inférieure à celle appliquée en son centre, en extrudant en continu le bloc métallique compacté à deux reprises à partir du récipient sous pression dans un moule, tout en conservant les conditions décrites. On obtient des produits non poreux, denses et sans tavelures, même en utilisant une petite presse, et avec réduction de la consommation d'énergie.

### Buts de l'invention

La présente invention vise à fournir une solution pour le recyclage effectif de tous types et catégories de produits d'emballage en aluminium (foils, canettes, barquettes, capsules de thé et/ou café, ...), mais également sous forme de mélange avec de copeaux d'usinage, des déchets broyés ou des fragments ou pièces divers en aluminium, tels que des déchets d'équipement électrique, et leur valorisation comme nouveaux produits d'addition à haute teneur en aluminium (dans la série 1xxx par exemple) et en variante comme produits en aluminium contenant du zinc, du silicium et/ou du magnésium et autres métaux (manganèse, ...).

La présente invention a aussi pour but de proposer un nouveau cycle de fabrication à haute valeur écologique, complétement aligné sur le concept d'économie circulaire, dont le principe est essentiellement celui d'une économie en boucle réussissant à ne pas produire de déchets, ou en tout cas un strict minimum, et à réduire tout gaspillage, notamment de matières ou d'énergie.

### Résumé de l'invention

La présente invention se rapporte à un procédé de fabrication de produits à base d'aluminium basé sur une étape d'assemblage, c'est-à-dire un mélange maîtrisé, ou blend, de différents types de produits recyclés en aluminium et sur au moins la combinaison des étapes de traitement suivantes :
- collecte sélective de produits recyclés en aluminium provenant d'emballages, de copeaux d'usinage ou sous forme de pièces ou fragments broyés;
- assemblage et réalisation d'un mélange des produits recyclés collectés dans des proportions données en fonction de leur nature, de la voie de fabrication sélectionnée et de l'utilisation visée ;
- broyage et criblage du mélange pour donner un produit finement divisé ;
- compactage du produit finement divisé en briquettes, billettes ou blocs ; et si nécessaire pour la valorisation finale,
- fusion contrôlée des briquettes ;
- mise à nuance finale ;
- coulée et mise en forme en lingots titrés ou granules en fonction de la demande du client et/ou de l'utilisation visée.

Selon des modes d'exécution préférés ou exemplatifs, le procédé comporte en outre au moins une des caractéristiques suivantes ou encore une combinaison adéquate de celles-ci :
- les emballages en aluminium collectés sont flexibles, sous forme de feuilles souples, co-laminées ou non avec des feuilles de papier et/ou plastique, ou rigides/semi-rigides sous forme de canettes à boisson, de barquettes à destination de conteneur alimentaire, de plateaux menus ou de capsules de café et/ou thé ;
- le mélange est réalisé selon les proportions suivantes :
   - emballages flexibles : 5 à 50%,
   - emballages rigides/semi-rigides : 5 à 50%,
   - copeaux, pièces et fragments : 5 à 100% ;
- les composants du mélange subissent un déshuilage préalable éventuel ;
- le produit résultant du broyage et de criblage possède une granulométrie comprise entre quelques millimètres à quelques centimètres ;
- la pression de compactage est de 300 bar au maximum sur une surface de 10 à 50 cm² ;
- la taille des briquettes est d'environ 10 à 50 cm² de base sur une hauteur de 3 à 20 cm ;
- la mise à nuance finale comprend une addition d'autres produits en aluminium recyclé, notamment dans les séries 2000 à 7000, et/ou d'alliages ;
- le compactage en briquettes est suivi d'une valorisation directe des briquettes, de préférence en l'absence de produits organiques dans les produits recyclés de base ou en présence de tels produits dont la teneur est sous un certain seuil prédéterminé, ce seuil étant de préférence entre 0,1 à 1,5% d'organiques ;
- les briquettes ont une densité comprise entre 0,5 et 2,5 kg/dm³ ;
- le compactage en briquettes est suivi d'une fusion contrôlée des briquettes en four rotatif, de préférence lors de la présence dans les produits recyclés de base de produits organiques dont la teneur est au-dessus d'un certain seuil prédéterminé, ce seuil étant de préférence de 0,5% d'organiques ;
- la fusion contrôlée est réalisée en deux étapes, une pré-étape de pyrolyse entre 80 et 250°C, suivie d'une étape de fusion entre 650 et 860°C ;
- le bain en fusion subit un brassage additionnel, par rotation variable du four rotatif et suivi, en continu, des gaz et fumées ;
- la fusion contrôlée est réalisée avec ou sans sel, en batch ou en continu en ce compris l'alimentation du four, avec application d'un brûleur adapté, de préférence régénératif, et avec une post-combustion des gaz pour l'élimination des organiques et enfin avec un contrôle dynamique ;
- le contrôle dynamique de la fusion contrôlée comprend une analyse des gaz, une mesure de couple et/ou une mesure LIBS.

### Brève description des figures

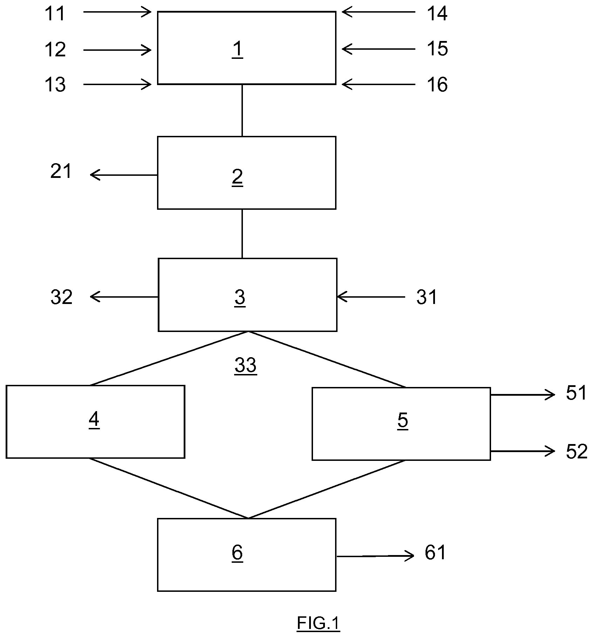

La figure 1 représente schématiquement un exemple de forme d'exécution de traitement de recyclage/valorisation selon la présente invention.

### Description d'une forme d'exécution préférée de l'invention

La présente invention concerne un cycle de fabrication basé sur une étape d'assemblage, c'est-à-dire un mélange maîtrisé (« blend »), de différents types de produits recyclés/recyclables en aluminium et sur au moins la combinaison des étapes de traitement suivantes :
- collecte sélective de produits recyclés en aluminium à partir d'emballages, par exemple de types foil, canettes, barquettes, capsules de thé et/ou café, copeaux, déchets et fragments divers, ... ;
- assemblage et réalisation de mélanges des produits recyclés collectés dans des proportions données en fonction de leur nature, de la voie de fabrication sélectionnée (voir ci-après) et de l'utilisation/la valorisation finale visée :
   - emballages flexibles : 5 à 50%,
   - emballages rigides/semi-rigides : 5 à 50%,
   - copeaux, déchets et fragments divers : 5 à 100% ;
- broyage de ces mélanges jusqu'à obtention d'une granulométrie allant de quelques millimètres à quelques centimètres ;
- compactage en briquettes, par exemple de dimensions suivantes : 21,8cm² de base x 3 à 8 cm de hauteur, avec une pression de 300bar au maximum, et si nécessaire pour la valorisation finale ;
- fusion contrôlée ;
- mise à nuance finale, et notamment pour les additions en bain de revêtement métallique, avec incorporation d'autres produits en aluminium recyclé (par exemple de classes 2000 à 7000) et/ou d'alliages ;
- coulée et mise en forme de lingots titrés ou granules en fonction de la demande du client et/ou de l'utilisation finale souhaitée.

Les proportions de produits recyclés sont données en poids et la somme des proportions indiquées est de 100%.

Selon une première forme d'exécution préférée, le compactage en briquettes est suivi d'une première valorisation directe des briquettes, de préférence en l'absence de produits organiques en quantité préjudiciable (peintures, vernis, résidus alimentaires, ...) ou étant au maximum de l'ordre de 0,1 à 1,5%. La densité est à contrôler, de préférence entre 0,5 et 2,5 g/cm³.

Selon une deuxième forme d'exécution préférée, le compactage en briquettes est suivi d'une fusion des briquettes en four rotatif pour les mélanges avec des organiques (>0,5%).

Selon un mode d'exécution préféré, la fusion contrôlée est réalisée en deux étapes avec pré-étape de pyrolyse, selon une première phase avec une température allant de 80 à 250°C et une deuxième phase de fusion avec une température, allant de de 650 à 856°C.

De préférence, la fusion contrôlée sera réalisée :
- avec ou sans sel ;
- en batch ou en continu (dont l'alimentation du four) ;
- avec application d'un brûleur adapté, éventuellement régénératif et d'une post-combustion des gaz ;
- avec un contrôle dynamique tel que : analyse des gaz, mesure de couple, LIBS, etc.

### EXEMPLE

La figure 1 donne un exemple de procédé de traitement de recyclage/valorisation de déchets recyclés en aluminium.

On procède d'abord à une collecte de différents types de produits recyclables en aluminium ou contenant de l'aluminium : emballages légers 11 et rigides 12, long copeaux d'usinage 13 (huileux ou non), courts copeaux secs 14 (non huileux), déchets d'équipements électriques et électroniques (DEEE) 15, fragments divers 16, etc.

On procède à un mélange 1 de ces produits selon des proportions à définir éventuellement en fonction du produit final visé (composition, etc.).

On procède à un broyage et un criblage 2 du mélange jusqu'à obtention d'un produit ayant une granulométrie allant de quelques millimètres à quelques centimètres. D'éventuels objets massifs 21 ne pouvant être broyés sont éliminés à ce stade.

On procède ensuite à la compaction 3 de ce produit de granulométrie maîtrisée, en ajoutant éventuellement des copeaux courts huileux 31, pour obtenir des briquettes 33 ainsi qu'une récolte d'huile de coupe 32. En l'absence notable de produits organiques, les briquettes sont valorisées directement, donc avec un by-pass de la fusion 4, suivie d'une mise en forme finale en lingots, barres, granules, etc. de dimensions appropriées 61.

En présence de produits organiques, alternativement, une fusion contrôlée 5 est réalisée, avec ou sans sel. Les matières organiques sont éliminées par pyrolyse et postcombustion 51. Une coulée/solidification 6 est réalisée pour obtenir le produit final titré 61 sous forme adéquate (lingots, barres, granules, cônes tronqués, méplats, etc.).

**Liste des symboles de référence**

| | |
|---|---|
| 1 | mélange |
| 2 | broyage |
| 3 | compactage |
| 4 | by-pass de fusion |
| 5 | fusion avec ou sans sel |
| 6 | coulée/solidification |
| 11 | emballages flexibles |
| 12 | emballages rigides |
| 13 | longs copeaux (huileux ou non) |
| 14 | copeaux courts secs |
| 15 | DEEE |
| 16 | fragments |
| 21 | objets massifs |
| 31 | copeaux courts (huileux) |
| 32 | huile de coupe |
| 33 | briquettes |
| 51 | pyrolyse et post-combustion des matières organiques |
| 52 | lingots d'aluminium aux formats désirés |
| 61 | lingots, barres, granules, cônes tronqués, méplats, etc. |

## Revendications

1. Procédé de fabrication de produits à base d'aluminium basé sur une étape d'assemblage, c'est-à-dire un mélange maîtrisé, ou blend, de différents types de produits recyclés en aluminium et sur au moins la combinaison des étapes de traitement suivantes :
- collecte sélective de produits recyclés en aluminium provenant d'emballages, de copeaux d'usinage, de déchets d'équipements électriques/électroniques et/ou sous forme de pièces ou fragments broyés (11, 12, 13, 14, 15, 16);
- assemblage et réalisation d'un mélange (1) des produits recyclés collectés dans des proportions données en fonction de leur nature, de la voie de fabrication sélectionnée et de l'utilisation visée ;
- broyage et criblage (2) du mélange pour donner un produit finement divisé ;
- compactage (3) du produit finement divisé en briquettes, billettes ou blocs (33), et si nécessaire pour la valorisation finale ;
- fusion contrôlée (5) des briquettes (33) ;
- mise à nuance finale ;
- coulée et/ou mise en forme (6) en lingots titrés ou granules (52, 61) en fonction de la demande du client et/ou de l'utilisation visée.

2. Procédé selon la revendication 1, **caractérisé en ce que** les emballages en aluminium collectés sont flexibles (11), sous forme de feuilles souples, co-laminées ou non avec des feuilles de papier et/ou plastique, ou rigides/semi-rigides (12) sous forme de canettes à boisson, de barquettes à destination de conteneur alimentaire, de plateaux menus ou de capsules de café et/ou thé.

3. Procédé selon la revendication 2, **caractérisé en ce que** le mélange est réalisé selon les proportions suivantes :
- emballages flexibles (11) : 5 à 50%,
- emballages rigides/semi-rigides (12) : 5 à 50%,
- copeaux, pièces et fragments (13, 14, 15, 16, 31) : 5 à 100%.

4. Procédé selon la revendication 1, **caractérisé en ce que** les composants du mélange (1) subissent un déshuilage préalable éventuel.

5. Procédé selon la revendication 1, **caractérisé en ce que** le produit résultant du broyage et du criblage (2) possède une granulométrie comprise entre quelques millimètres à quelques centimètres.

6. Procédé selon la revendication 1, **caractérisé en ce que** la pression de compactage (3) est de 300 bar au maximum sur une surface de 10 à 50 cm².

7. Procédé selon la revendication 1, **caractérisé en ce que** la taille des briquettes (33) est de 10 à 50 cm² de base sur une hauteur de 3 à 20 cm.

8. Procédé selon la revendication 1, **caractérisé en ce que** la mise à nuance finale comprend une addition d'autres produits en aluminium recyclé, notamment dans les séries 2000 à 7000, et/ou d'alliages.

9. Procédé selon la revendication 1, **caractérisé en ce que** le compactage en briquettes est suivi d'une valorisation directe des briquettes (33), de préférence en l'absence de produits organiques dans les produits recyclés de base ou en présence de tels produits dont la teneur est sous un certain seuil prédéterminé, ce seuil étant de préférence entre 0,1 à 1,5% d'organiques.

10. Procédé selon la revendication 9, **caractérisé en ce que** les briquettes (33) ont une densité comprise entre 0,5 et 2,5 g/cm³.

11. Procédé selon la revendication 1, **caractérisé en ce que** le compactage (3) en briquettes est suivi d'une fusion contrôlée (5) des briquettes en four rotatif, de préférence lors de la présence dans les produits recyclés de base de produits organiques dont la teneur est au-dessus d'un certain seuil prédéterminé, ce seuil étant de préférence de 0,5% d'organiques.

12. Procédé selon la revendication 11, **caractérisé en ce que** la fusion contrôlée (5) est réalisée en deux étapes, une pré-étape de pyrolyse entre 80 et 250°C, suivie d'une étape de fusion proprement dite entre 650 et 860°C.

13. Procédé selon la revendication 11, **caractérisé en ce que** le bain en fusion (5) subit un brassage additionnel, par rotation variable du four rotatif et suivi, en continu, des gaz et fumées.

14. Procédé selon la revendication 11, **caractérisé en ce que** la fusion contrôlée (5) est réalisée avec ou sans sel, en batch ou en continu en ce compris l'alimentation du four, avec application d'un brûleur adapté, de préférence régénératif, et avec une post-combustion des gaz pour l'élimination des organiques et enfin avec un contrôle dynamique.

15. Procédé selon la revendication 14, **caractérisé en ce que** le contrôle dynamique de la fusion contrôlée comprend une analyse des gaz, une mesure de couple et/ou une mesure LIBS.

## Patentansprüche

1. Verfahren zur Herstellung von Produkten auf der Basis von Aluminium, basierend auf einem Schritt des Zusammenführens, das heißt einem kontrollierten Gemisch oder Blend verschiedener Typen recycelter Produkte aus Aluminium und auf mindestens der Kombination der folgenden Verarbeitungsschritte:
- selektives Sammeln recycelter Produkte aus Aluminium von Verpackungen, Bearbeitungsspänen, Abfällen elektrischer/elektronischer Ausrüstungen und/oder in Form von Teilen oder zerkleinerten Fragmenten (11, 12, 13, 14, 15, 16);
- Zusammenführen und Herstellen eines Gemischs (1) der gesammelten recycelten Produkte in bestimmten Anteilen in Abhängigkeit von ihrer Art, ihrem gewählten Herstellungsweg und von der angestrebten Verwendung;
- Zerkleinern und Screening (2) des Gemischs, um ein fein unterteiltes Produkt zu erhalten;
- Kompaktieren (3) des fein unterteilten Produkts in Briketts, Billetts oder Blöcke (33), und, wenn notwendig, für die Endverwertung;
- kontrolliertes Schmelzen (5) der Briketts (33);
- abschließendes Legieren;
- Gießen und/oder Formen (6) in titrierte Barren oder Granulat (52, 61) in Abhängigkeit von der Anforderung des Kunden und/oder der angestrebten Verwendung.

2. Verfahren nach Anspruch 1, **dadurch gekennzeichnet, dass** die gesammelten Aluminiumverpackungen biegsam (11) in Form von flexiblen Folien, co-laminiert oder nicht mit Papier- und/oder Kunststoffbögen, oder starr/halbstarr (12) in Form von Getränkedosen, Schalen, die als Lebensmittelbehältnis bestimmt sind, Menüplatten oder Kaffee- und/oder Teekapseln sind.

3. Verfahren nach Anspruch 2, **dadurch gekennzeichnet, dass** das Gemisch gemäß den folgenden Anteilen hergestellt wird:
- biegsame Verpackungen (11): 5 bis 50 %,
- starre/halbstarre Verpackungen (12): 5 bis 50 %,
- Späne, Teile und Fragmente (13, 14, 15, 16, 31): 5 bis 100 %.

4. Verfahren nach Anspruch 1, **dadurch gekennzeichnet, dass** die Bestandteile des Gemischs (1) zuvor eventuell entölt werden.

5. Verfahren nach Anspruch 1, **dadurch gekennzeichnet, dass** das Produkt im Ergebnis der Zerkleinerung und des Screenings (2) eine Korngröße besitzt, die zwischen einigen Millimetern bis einigen Zentimetern liegt.

6. Verfahren nach Anspruch 1, **dadurch gekennzeichnet, dass** der Kompaktierungsdruck (3) maximal 300 bar auf einer Fläche von 10 bis 50 cm² beträgt.

7. Verfahren nach Anspruch 1, **dadurch gekennzeichnet, dass** die Größe der Briketts (33) 10 bis 50 cm² an der Basis über eine Höhe von 3 bis 20 cm beträgt.

8. Verfahren nach Anspruch 1, **dadurch gekennzeichnet, dass** das abschließende Legieren ein Hinzufügen von anderen Produkten aus recyceltem Aluminium umfasst, insbesondere bei den Serien 2000 bis 7000, und/oder von Legierungen.

9. Verfahren nach Anspruch 1, **dadurch gekennzeichnet, dass** dem Kompaktieren zu Briketts eine direkte Verwertung der Briketts (33), vorzugsweise bei Abwesenheit von organischen Produkten in den recycelten Basisprodukten oder bei Anwesenheit derartiger Produkte, deren Gehalt unter einem bestimmten, vorher festgelegten Grenzwert liegt, folgt, wobei dieser Grenzwert vorzugsweise zwischen 0,1 bis 1,5 % Organischen liegt.

10. Verfahren nach Anspruch 9, **dadurch gekennzeichnet, dass** die Briketts (33) eine Dichte haben, die zwischen 0,5 und 2,5 g/cm³ liegt.

11. Verfahren nach Anspruch 1, **dadurch gekennzeichnet, dass** der Kompaktierung (3) in Briketts eine gesteuerte Schmelze (5) der Briketts im Drehofen folgt, vorzugsweise bei Anwesenheit in den recycelten Basisprodukten von organischen Produkten, deren Gehalt über einem bestimmten, vorher festgelegten Grenzwert liegt, wobei dieser Grenzwert vorzugsweise 0,5 % Organische beträgt.

12. Verfahren nach Anspruch 11, **dadurch gekennzeichnet, dass** die gesteuerte Schmelze (5) in zwei Schritten durchgeführt wird, einem vorbereitenden Pyrolyseschritt zwischen 80 und 250 °C, gefolgt von einem eigentlichen Schmelzschritt zwischen 650 und 860 °C.

13. Verfahren nach Anspruch 11, **dadurch gekennzeichnet, dass** das Schmelzebad (5) durch variable Rotation des Drehofens zusätzlich gerührt wird, und kontinuierlich gefolgt von Gasen und Rauchgasen.

14. Verfahren nach Anspruch 11, **dadurch gekennzeichnet, dass** die gesteuerte Schmelze (5) mit oder ohne Salz als Batch oder kontinuierlich durchgeführt wird, dabei inbegriffen die Versorgung des Ofens, mit Anwendung eines geeigneten, vorzugsweise regenerativen Brenners, und mit einer Nachverbrennung der Gase zwecks Entfernung der Organischen und schließlich mit einer dynamischen Steuerung.

15. Verfahren nach Anspruch 14, **dadurch gekennzeichnet, dass** die dynamische Steuerung der gesteuerten Schmelze eine Analyse der Gase, eine Momentmessung und/oder eine LIBS-Messung umfasst.

## Claims

1. A method for manufacturing aluminum-based products on the basis of an an assembly step, that is to say, a controlled mixture, or blend, of different types of recycled aluminum products and of at least one combination of the following treatment steps:
- selectively collecting recycled aluminum products coming from packaging, machine cuttings, electrical/electronic equipment waste and/or in the form of shredded pieces with fragments (11, 12, 13, 14, 15, 16);
- assembling and producing a mixture (1) of collected recycled products in given proportions depending on their nature, selected manufacturing avenue and targeted use;
- shredding and screening (2) the mixture to yield a finely-divided product;
- compacting (3) the finely-divided product into briquettes, billets or slabs (33), and if necessary for final upgrading;
- controlled melting (5) of the briquettes (33);
- final alloying;
- pouring and/or shaping (6) in graded ingots or granulates (52, 61) depending on client's request and/or targeted use.

2. The method according to Claim 1, **characterized in that** the collected aluminum packages are flexible (11), in the form of flexible sheets, whether co-rolled with sheets of paper and/or plastic or not, or rigid/semi rigid (12) in the form of beverage cans, trays for use as food containers, meal trays or coffee and/or tea capsules.

3. The method according to Claim 2, **characterized in that** the mixture is achieved in the following proportions:
- flexible packages (11): 5 to 50%,
- rigid/semi rigid packages (12): 5 to 50%,
- cuttings, pieces and fragments (13, 14, 15, 16, 31): 5 to 100%.

4. The method according to Claim 1, **characterized in that** the components of the mixture (1) possibly undergo prior oil removal.

5. The method according to Claim 1, **characterized in that** the product resulting from the shredding and screening (2) has a particle size of between several millimeters and several centimeters.

6. The method according to Claim 1, **characterized in that** the compacting pressure (3) is no more than 300 bar over a surface of 10 to 50 cm².

7. The method according to Claim 1, **characterized in that** the size of the briquettes (33) is from 10 to 50 cm² of base over a height of 3 to 20 cm.

8. The method according to Claim 1, **characterized in that** its final alloying comprises an addition of other recycled aluminum products, in particular in series 2000 to 7000, and/or alloys.

9. The method according to Claim 1, **characterized in that** the compacting into briquettes is followed by direct upgrading of the briquettes (33), preferably in the absence of organic products in the recycled base products or in the presence of such products whose content level is below a certain predetermined threshold, this threshold preferably being between 0.1 to 1.5% organics.

10. The method according to Claim 9, **characterized in that** the briquettes (33) have a density of between 0.5 and 2.5 g/cm³.

11. The method according to Claim 1, **characterized in that** the compacting (3) into briquettes is followed by a controlled melting (5) of the briquettes in a rotary furnace, preferably when organic products are present in the recycled base products whose content level is above a certain predetermined threshold, this threshold preferably being 0.5% organics.

12. The method according to Claim 11, **characterized in that** the controlled melting (5) is achieved in two steps, a pre-step for pyrolysis between 80 and 250°C, followed by a proper melting step between 650 and 860°C.

13. The method according to Claim 11, **characterized in that** the melting bath (5) undergoes additional mixing, by variable rotation of the rotary furnace and followed by continuous monitoring of the gases and fumes.

14. The method according to Claim 11, **characterized in that** the controlled melting (5) is achieved with or without salt, in batches or continuously including the supply of the furnace, with application of a suitable burner, which is preferably regenerative, and with a post-combustion of the gases in order to eliminate the organics and lastly a dynamic control.

15. The method according to Claim 14, **characterized in that** the dynamic control of the controlled melting comprises an analysis of the gases, a torque measurement and/or a LIBS measurement.
